**Europäisches Patentamt**

(19) **European Patent Office**

**Office européen des brevets**

(11) Numéro de publication: **0 101 624**
**B1**

(12) **FASCICULE DE BREVET EUROPÉEN**

(45) Date de publication du fascicule du brevet:
**18.03.87**

(51) Int. Cl.⁴: **A 63 F 7/00,** G 09 B 19/02

(21) Numéro de dépôt: **83201024.3**

(22) Date de dépôt: **11.07.83**

(54) Jeu didactique par sélection des trajectoires parcourues par des billes.

(30) Priorité: **27.07.82 IT 6794582**

(43) Date de publication de la demande:
**29.02.84 Bulletin 84/9**

(45) Mention de la délivrance du brevet:
**18.03.87 Bulletin 87/12**

(84) Etats contractants désignés:
**AT BE CH DE FR GB LI LU NL SE**

(56) Documents cité:
**US-A-2 866 275**
**US-A-3 331 143**
**US-A-3 643 347**

(73) Titulaire: **ALESSANDRO QUERCETTI & C.**
**Fabbrica Giocattoli Formativi - S.p.A., Corso**
**Vigevano, 25, I-10152 Torino (IT)**

(72) Inventeur: **Quercetti, Alessandro, Strada S. Vito -**
**Revigliasco 48, I-10133 Torino (IT)**

(74) Mandataire: **Patrito, Pier Franco, Dr. Ing., Cabinet**
**PATRITO BREVETTI Via Don Minzoni 14, I-10121**
**Torino (IT)**

LIBER, STOCKHOLM 1987

## Description

La présente invention concerne un jeu du type comprenant un plan de jeu qui peut être parcouru par gravité par des billes, et des éléments de guidage situés sur le plan de jeu et dont une partie peut être manoeuvrée pour influencer la trajectoire suivie par les billes.

Les jeux de ce type ont généralement le caractére de trou-madames ou de flippers, dans lesquels la trajectoire de chaque bille est exposée à des influences en partie volontaires et en partie fortuites, qui donnent au jeu un caractère d'habileté, mais limitent son application au seul domaine de l'amusement, en excluant tout effet didactique.

On connait (US-A-3,331,143) un dispositif comportant une boîte avec trois entrées et deux sorties avec cases de réception pour des billes, des éléments de guidage et des éléments d'aiguillage qui peuvent être manoeuvrés individuellement au commencement du jeu, pour établir des différentes trajectoires des billes introduites, mais qui ensuite modifient spontanement leur positions lors du passage de chaque bille. Dans un tel dispositif on ne pourrait pas établir plus que deux cases de sortie, ni suivre visuellement la trajectoire des billes, et d'autre côté le déplacement spontanée des éléments d'aiguillage introduit un comportement ne dépendant pas directement de la volonté de l'utilisateur.

Il est encore connu (US-A-3,643,347) un dispositif comportant un plan de jeu, un magasin supérieur pour des billes, un obturateur pour laisser sortir du magasin les billes une aprés l'autre, un magasin inférieur comportant plusieurs colonnes et un organe sélecteur pour modifier la hauteur de ces colonnes, de sorte à ranger en chaque colonne un numéro préfixé de billes. Ce dispositif permet de déterminer, par un procédé assez compliqué, l'équivalent en une certaine base choisie d'un numéro donné representé par des billes. Il ne présente nullement la possibilité de suivre visuellement les trajectoires des billes.

Le but de l'invention est de réaliser un jeu du type général mentionné, dans lequel le joueur puisse avoir le contrôle total de la trajectoire suivie par chaque bille et la possibilité de faire arriver la bille à un point déterminé dépendant seulement de l'habileté du joueur, la trajectoire de chaque bille pouvant être suivie visuellement, et cela en des conditions telles que le développement du jeu puisse être mis facilement en relation avec les notions relatives à la numération en des bases différentes, de sorte que le jeu soit susceptible aussi d'applications didactiques.

Ce but est atteint, selon la présente invention, par un jeu comprenant un plan de jeu qui peut être parcouru par gravité par des billes, un canal de guidage qui présente des ordres successifs de bifurcations contrôlées par des moyens d'aiguillage, chaque moyen d'aiguillage possédant deux positions operatives correspondant a l'accessibilité de l'une des deux branches situées en aval de chaque bifurcation, et une pluralité de cases de réception des billes situées à la terminaison des dernières bifurcations du canal de guidage, caractérisé en ce que le jeu est muni d'un magasin supérieur pour les billes et d'un obturateur manoeuvrable pour laisser sortir du magasin les billes une après l'autre, que le canal de guidage a son commencement en correspondance dudit obturateur, que lesdites cases de réception des billes présentent inférieurement un obturateur multiple qui permet de décharger toutes les billes dans une partie interieure du plan de jeu, que la première bifurcation du canal de guidage est contrôlée par un moyen d'aiguillage séparément connecté à un premier organe de commande, que les bifurcations de chaque ordre successif des différentes branches du canal de guidage sont connectees a un organe de commande du même ordre, et que les différents organes de commande sont disposés en ordre.

Grâce à ces dispositions, le joueur peut prévoir exactement par un raisonnement fondé sur la logique de la numération binaire, sur la base que la position des organes de commande des moyens d'aiguillage, quelle doit être la case atteinte par une bille admise dans le canal de guidage, et peut suivre visuellement le développement de la trajectoire effectivement suivie par la bille, ce qui implique un certaine habileté ainsi qu'une activite formative.

Au point de vue structurel, lesdits moyens d'aiguillage peuvent être constitués par des prismes à base triangulaire capables d'obstruer chaque fois une branche d'une bifurcation en servant en même temps comme glissière d'embouchure pour l'autre branche, tous les moyens d'aiguillage des bifurcations d'un même ordre étant supportés par une latte commune, emboîtée et coulissant longitudinalement dans une glissière evidée dans le plan de jeu, et présentant à l'une de ses extrémités une saillie constituant l'organe de commande. Chaque latte peut présenter deux évidements coopérant avec un organe à ressort pour définir les deux positions opératives des moyens d'aiguillage supportés par la latte. Ces caractéristiques autorisent une construction simple et économique des mécanismes pour la commande des moyens d'aiguillage.

De leur côté, lesdits obturateurs peuvent être constitués par des palettes disposées normalement de sorte à intercepter la trajectoire des billes et pouvant être déplacées dans une position neutralisée, les palettes de chaque obturateur étant supportées par une latte commune, emboitée et coulissant longitudinalement dans une glissière évidée dans le plan de jeu, ayant à l'une de ses extrémités une saillie qui forme l'organe de commande, et coopérant avec un organe à ressort qui la pousse vers la position normale d'interception des palettes. Ces caractéristiques permettent une construction simple et économique des mécanismes pour la commande des obturateurs.

De préférence, l'obturateur disposé à la sortie du magasin présente deux palettes réciproquement déplacées pour limiter le passage à une seule bille pour chaque actionnement, et il supporte aussi un goujon mobile dans le magasin pour les billes. Cette caractéristique assure un remuement périodique des billes dans le magasin qui prévient les engorgements possibles.

Avantageusement, ledit plan de jeu comprend une feuille disposée au-dessus desdites lattes qui supportent les moyens d'aiguillage et les palettes d'obturation. De cette façon, les mécanismes peuvent être partiellement cachés et le plan de jeu peut être décoré ou marqué de la façon désirée en imprimant opportunément ladite feuille.

Le plan de jeu peut former, sous ledit obturateur multiple des cases, un canal de retour s'étendant périphériquement lelong du plan de jeu et débouchant dans le magasin supérieur. De cette façon, après chaque phase de jeu l'on peut faire revenir les billes au magasin supérieur en inclinant opportunément le plan de jeu.

Ledit plan de jeu est couvert par un plan transparent capable de retenir les billes sur le plan de jeu tout en permettant de les observer. De préférence, le canal de guidage pour le plan de jeu est constructivement présenté par ledit plan transparent. On peut ainsi réaliser des conformations compliquées du canal de guidage sans aucune difficulté constructive.

Avantageusement, ledit canal de guidage est marqué, en correspondance de ses bifurcations, par des signaux correspondants à des signaux similaires qui marquent les positions des organes de commande des moyens d'aiguillage correspondants. De préférence, lesdits signaux sont constitués par des colorations différentes des branches s'étendant de chaque bifurcation du canal de guidage, et par des zones correspondemment colorées découvertes par les organes de commande. Cela facilite la définition d'une corrélation visuelle entre les positions des organes de commande et les conséquences de la manoeuvre de l'aiguillage sur la trajectoire de la bille.

Avantageusement, les deux positions des organes de commande des moyens d'aiguillage sont marquées par les chiffres 0 et 1, disposés de sorte que les chiffres relatifs aux positions des organes de commande, lus de haut en bas, expriment en numération binaire le numéro d'ordre progressif de la case rendue accessible à la bille. En outre, lesdites cases sont, à leur tour, marquées par un numéro d'ordre progressif exprimé en numération décimale. Ces dispositions expriment d'une façon concrète la correspondance entre numéros exprimés en numération décimale et respectivement en numération binaire, en facilitant ainsi l'action d'apprendre, l'operation de traduction de l'un à l'autre système de numération.

De préférence, ledit plan transparent superposé au plan de jeu présente des moyens de référence de position, et il est prévu un organe de couverture non transparent qui peut être appliqué auxdits moyens de référence de position pour cacher le canal de guidage du plan de jeu et ses ramifications. Si l'on utilise cet accessoire, il devient impossible de contrôler visuellement la relation entre la position des organes de commande et la case rendue accessible à la bille, ce qui oblige à prévoir cette relation par le raisonnement, en vérifiant ensuite son exactitude. Cela est indiqué pour une phase de jeu ou de préparation plus avancée.

Avantageusement, le plan de jeu présente, à sa surface inférieure, des moyens d'accrochage pour supporter ledit organe de couverture lorsqu'il n'est pas utilisé. Cela prévient la perte de l'accessoire et les difficultés de le retrouver au moment de l'utilisation.

Lesdites et d'autres caractéristiques et avantages de l'objet de la présente invention ressortiront plus clairement de la suivante description d'une forme de réalisation, donnée à titre d'example non limitatif, et représentée schématiquement dans les dessins annexés, dans lesquels:

la figure 1 représente le jeu vu de front, en petite échelle, sans l'application de l'organe de couverture;

la figure 2 représente d'une façon similaire le jeu dans la condition pourvue de l'organe de couverture;

la figure 3 représente le plan de jeu avec les mécanismes de commande, tel qu'il se présente après avoir emporté le plan transparent et la feuille d'occultation; et

la figure 4 représente le jeu en vue latérale selon la flèche IV de la figure 1.

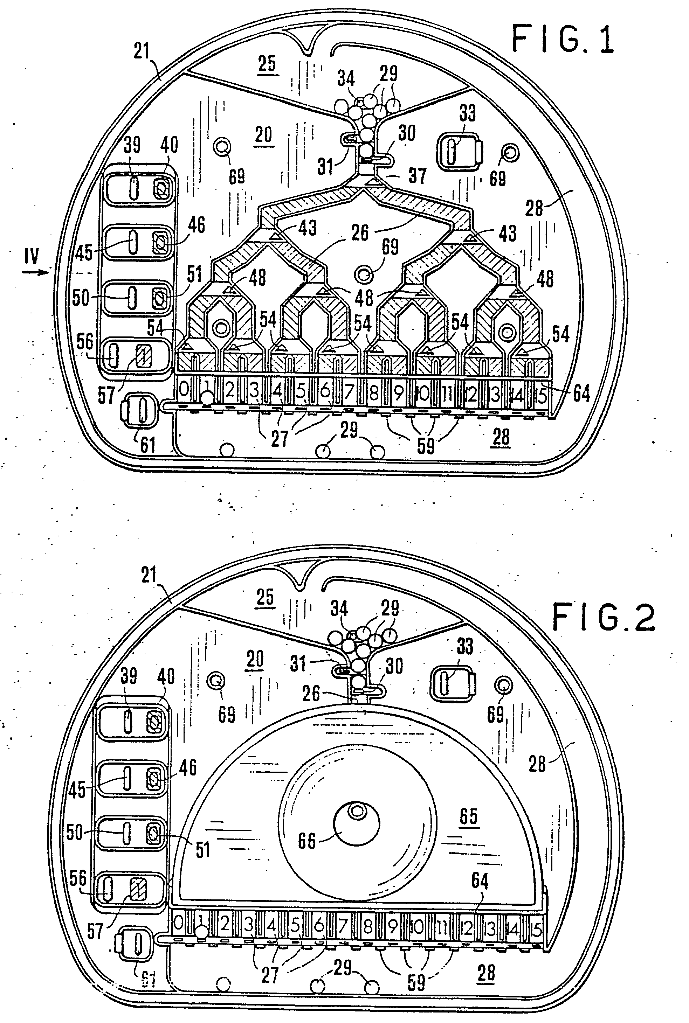

Le jeu comprend un plan de jeu 20, dans ce cas en forme de segment circulaire, muni d'un bord périphérique 21 et de pieds 22 pour son appui sur la surface 23 d'une table ou semblable, en position inclinée de telle façon à assurer le roulement des billes sur le plan de jeu 20. Sur le plan de jeu 20 est disposé un plan transparent 24 lequel présente, sur sa surface tournée vers le plan de jeu 20, des saillies définissant les différents espaces réservés aux billes, à savoir: un magasin supérieur 25, un canal de guidage 26 ayant plusieurs ramifications, une série de cases 27 disposée au débouché des ramifications, et un canal de retour 28 qui se commence sous les cases 22 et débouche dans le magasin supérieur 25. Dans les figures 1 et 2 sont montrées quelques billes 29 situées dans le magasin 25, dans une case 27 et dans le canal de retour 28. Bien entendu, en réalité le nombre des billes comprises dans le jeu sera généralement plus élevé.

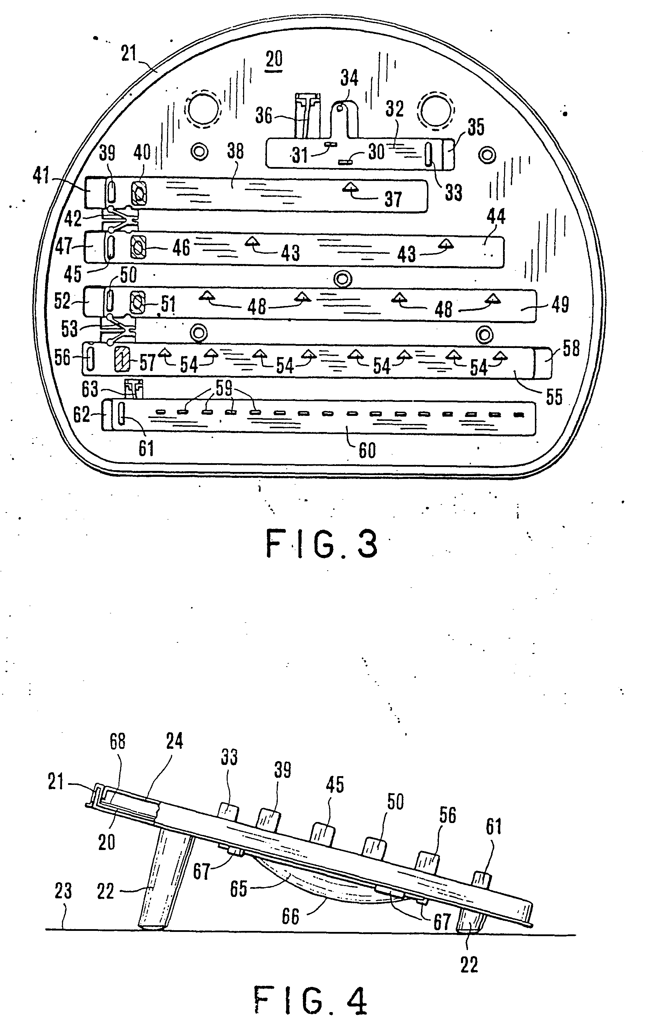

A la sortie du magasin 25 est disposé un obturateur formé par deux palettes réciproqument déplacées 30 et 31, montées sur une latte 32 coulissant dans une glissière 35 évidée dans le plan 20, et pourvue d'une saillie de commande 33 qui passe à travers le plan transparent 24 dans une fenêtre correspondante. Un organe à ressort 36 pousse la latte 32 vers la position d'obturation représentée; en agissant sur la saillie 33 la latte 32 avec les palettes 30 et 31 peut être déplacée temporairement, et ensuite elle revient spontanément à sa position d'obturation. Dans ce procès les palettes 30 et 31 laissent sortir du magasin 25 une et une seule bille 29. La latte 32 présente aussi un goujon 34 qui fait saillie dans le magasin 25 et qui, à chaque actionnement de l'organe de commande 33, remue les billes 29 en empêchant leur engorgement. Dans le jeu en condition d'utlisation, le mécanisme décrit est caché par une feuille 68 faisant partie du plan de jeu et sur laquelle roulent les billes 29; cette feuille est emportée dans la figure 3 afin de montrer les mecanismes situés au-dessous d'elle.

Le canal de guidage 26 se commence en aval de l'obturateur décrit et il présente immédiatement une première ramification, dans laquelle est inséré le premier moyen d'aiguillage 37 formé par un prisme à section triangulaire monté sur une latte 38 coulissant dans une glissière 41 du plan de jeu 20 et pourvue d'une saillie de commande 39 et d'une fenêtre 40, aussi bien que de deux évidements coopérant avec un organe à ressort 42 pour définir les deux positions de la latte 38; dans la position illustrée, déplacée à droite, le moyen d'aiguillage 37 intercepte la branche droite (en regardant la figure 1) du canal 26 et conduit les billes vers la branche gauche; ces deux branches sont colorées d'une manière différente (réprésentée par des hachures différentes dans le dessin) et la fenêtre 40 découvre une zone située au-dessous d'elle colorée correspondamment à la branche accessible et portant, dans ce cas, le chiffre 0. En déplaçant l'organe de commande 39 on rendrait accessible la branche droite du canal de guidage 26 et on découvrerait à travers la fenêtre 40 une correspondante zone colorée portant le chiffre 1.

Chacune des branches ainsi bifurquées du canal 26 conduit à une bifurcation de 2-ème ordre dans laquelle se trouve un moyen d'aiguillage 43. Les deux moyens d'aiguillage 43 en forme de prismes triangulaires sont portés par une latte commune 44 coulissant dans une glissière 47 évidée dans le plan de jeu 20 et pourvue d'une saillie de commande 45, d'une fenêtre 46 et d'évidements coopérant avec l'organe à ressort 42 pour déterminer les deux positions opératives de la latte 44. Le comportement de ces parties est tout à fait similaire de celui des parties correspondantes de la première bifurcation.

Analoguement à ce qui précède, les branches du canal de guidage 26 venant des bifurcations du 2-ème ordre aboutissent à des bifurcations de 3-ème ordre munies de moyens d'aiguillage 48 montés sur une latte 49 coulissant dans une glissière 52 et présentant une saillie de commande 50 et une fenêtre 51. Les positions opératives sont définies par un organe à ressort 53. Enfin, les branches du canal de guidage 26 qui viennent des bifurcations du 3-ème ordre aboutissent à des bifurcations du 4-ème ordre imunies de moyens d'aiguillage 54 montés sur une latte 55 coulissant dans une glissière 58 et présentant une saillie de commande 56 et une fenêtre 57, coopérant avec l'organe à ressort 53. Dans la forme de réalisation illustrée sont prévus quatre ordres de bifurcations du canal de guidage 26, mais il est évident que l'on pourrait choisir un nombre différent d'ordres de bifurcations.

Les branches du canal de guidage 26, partant des bifurcations du 4-ème ordre, conduisent aux cases 27, sous lesquelles se trouve un obturateur multiple comprenant une pluralité de palettes montées sur une latte commune 60 coulissant dans une glissière 62 évidée dans le plan de jeu 20 et présentant une saillie de commande 61; la latte 60 est retenue en position d'obturation par un organe à ressort 63 et, quand on la déplace en agissant sur l'organe de commande 61, elle laisse descendre les billes 29 qui se trouvent dans les cases 27, vers le canal de retour 28. Les cases 27 sont numérotées consécutivement selon la numération décimale, dans ce cas donc de 0 a 15.

Comme on peut bien le comprendre, avec les dispositions décrites, si l'on compose un numéro binaire visible en ordre vertical à travers les fenêtres 40, 46, 51 et 57, et l'on agît ensuite sur l'obturateur 30 pour fair tomber une bille 29, cette bille, guidée par les différents organes d'aiguillage 37, 43, 48 et 54 dans les bifurcations successives du canal de guidage 26, aboutit à la case 27 marquée, en numération décimale, par le même numéro qui à été composé en numération binaire. De cette façon, dans la configuration illustrée, en composant le numéro binaire 0001 on a ouvert l'accès à la case 1. Si, par exemple, on aurait composé le numéro binaire 1010 on aurait, à la descente de la bille, une déviation à droite à la première bifurcation, une déviation à gauche à la deuxième bifurcation, une déviation à droite à la troisième bifurcation et une déviation à gauche à la quatrième bifurcation, en arrivant ainsi à la case No. 10. Dans ce procès, l'observation des déviations successives de la bille aide l'observateur à matérialiser et mémoriser le mécanisme de la numération binaire et celui de la traduction des numéros de l'un à l'autre système de numération.

Le plan transparent 24 présente une saillie de référence 64 sur laquelle peut s'appuyer un organe de couverture 65, non transparent et muni d'un trou central 66 servant pour faciliter l'opération de le saisir. L'organe 65, qui dans ce cas est presque semicirculaire, est réalisé de sorte à cacher tout entier le parcours du canal de guidage 26 avec ses bifurcations et ses moyens d'aiguillage. En plus des organes de commande et des fenêtres respectives, demeurent visibles seulement les cases 27. Dans cette configuration, représentée dans la figure 2, le mécanisme des déviations de la bille est caché, et la prévision de la case accessible est possible seulement par raisonnement théorique sur la base des positions des organes de commande. Cette configuration est donc indiquée pour un étage de préparation plus avancé.

Lorsque l'organe de couverture 65 n'est pas utilisé, on l'accroche à des saillies 67 présentées par la surface inférieure du plan de jeu 20.

Il est clair que les détails constructifs des parties décrites sont susceptibles d'amples modifications; ainsi, la forme du plan de jeu, le nombre des bifurcations, la disposition des organes de commande, les moyens pour marquer les branches et les notations correspondantes des organes de commande peuvent être choisis avec une grande liberté. La construction décrite, laquelle assure une grande simplicité de réalisation et dans laquelle les différents composants sont simplement superposés et peuvent être assemblés, par exemple, au moyen de bouchons à encliquetage élastique 69, n'est donc pas limitative, et beaucoup d'autres systèmes constructifs peuvent être employés. Les moyens d'aiguillage pourraient être réalises par des aiguilles oscillantes. Dans les cas où l'on désire de rendre plus compliqué le jeu, en renonçant à son caractère didactique, on peut prévoir des ramifications comprenant plus de deux branches. Enfin, pour certaines applications l'organe de couverture 65 pourrait aussi bien être fixe.

**Revendications**

1.- Jeu comprenant un plan de jeu (20) qui peut être parcouru par gravité par des billes (29), un canal de guidage (26) qui présente des ordres successifs de bifurcations contrôlées par des moyens d'aiguillage (37, 43, 48, 54), chaque moyen d'aiguillage possédant deux positions opératives correspondant à l'accessibilité de l'une des deux branches situées en aval de chaque bifurcation, et une pluralité de cases (27) de réception des billes situées à la terminaison des dernières bifurcations du canal de guidage (26), caractérisé en ce que le jeu est muni d'un magasin supérieur (25) pour les billes et d'un obturateur (30-31) manoeuvrable pour laisser sortir du magasin les billes une après l'autre, que le canal de guidage (26) a son commencement en correspondance dudit obturateur (30-31), que lesdites cases (27) de réception des billes présentent inférieurement un obturateur multiple (59) qui permet de décharger toutes les billes dans une partie inférieure (28) du plan de jeu (20), que la première bifurcation du canal de guidage est contrôlée par un moyen d'aiguillage (37) separément connecté à un premier organe de commande (39), que les bifurcations de chaque ordre successif des différentes branches du canal de guidage (26) sont connectées à un organe de commande (45, 50, 56) du même ordre, et que les différents organes de commande (39, 45, 50, 56) sont disposés en ordre.

2.- Jeu selon la revendication 1, caractérisé en ce que lesdits moyens d'aiguillage (37, 43, 48, 54) sont constitués par des prismes à base triangulaire capables d'obstruer chaque fois une branche d'une bifurcation en servant en même temps comme glissière d'embouchure pour l'autre branche, tous les moyens d'aiguillage (37, 43, 48, 54) des bifurcations d'un même ordre étant supportés par une latte commune (38, 44, 49, 55), emboîtée et coulissant longitudinalement dans une glissière (41, 47, 52, 58) évidée dans le plan de jeu (20), et présentant à l'une de ses extrémites une saillie (39, 45, 50, 56) constituant l'organe de commande.

3.- Jeu selon la revendication 2, caractérisé en ce que chacune desdites lattes (36, 44, 49, 55) présente deux évidements coopérant avec un organe à ressort (42, 53) pour définir les deux positions opèratives des moyens d'aiguillage supportés par la latte.

4.- Jeu selon la revendication 1, caractérisé en ce que lesdits obturateurs (30 - 31, 59) sont constitués par des palettes disposées normalement de sorte à intercepter la trajectoire des billes (29) et pouvant être déplacées dans une position neutralisée, les palettes (30 - 31, 59) de chaque obturateur étant supportées par une latte (32, 60) commune, emboitée et coulissant longitudinalement dans une glissière (35, 62) évidée dans le plan de jeu (20), ayant à l'une de ses extremités une saillie (33, 61) qui forme l'organe de commande, et coopérant avec un organe a ressort (36, 63) qui la pousse vers la position normale d'interception des palettes.

5.- Jeu selon la revendication 4, caractérisé en ce que l'obturateur (31) disposé à la sortie du magasin (25) présente deux palettes (30, 31) réciproquement déplacées pour limiter le passage à une seule bille (29) pour chaque actionnement, et il supporte aussi un goujon (34) mobile dans le magasin (25) à billes.

6.- Jeu selon les revendications 2 à 5, caractérisé en ce que ledit plan de jeu (20) comprend une feuille (68) disposée au-dessus desdites lattes (32, 35, 44, 49, 55, 60) qui supportent les moyens d'aiguillage (37, 43, 48, 54) et les palettes d'obturation (30, 31, 59).

7.- Jeu selon la revendication 1, caractérisé en ce que ledit plan de jeu (20) forme, sous ledit obturateur multiple (59) des cases (37) un canal de retour (28) s'étendant périphériquement lelong du plan de jeu (20) et débouchant dans le magasin supérieur (25).

8.- Jeu selon la revendication 1, caractérisé en ce que ledit plan de jeu (20) est couvert par un plan transparent (24) capable de retenir les billes (29) sur le plan de jeu tout en permettant de les observer, et en ce que le canal de guidage (26) pour le plan de jeu (20) est constructivement présente par ledit plan transparent (24).

9.- Jeu selon la revendication 1, caractérisé en ce que ledit canal de guidage (26) est marqué, en correspondance de ses bifurcations, par des signaux correspondants à des signaux similaires qui marquent les positions des organes de commande (39, 45, 50, 56) des moyens d'aiguillage correspondants (37, 43, 48, 54).

10.- Jeu selon la revendication 9, caractérisé en ce que lesdits signaux sont constitués par des colorations différentes des branches s'étendant de chaque bifurcation du canal de guidage (26), et par des zones correspondamment colorées découvertes par les organes de commande (39, 45, 50, 56).

11.- Jeu selon la revendication 1, caractérisé en ce que les deux positions des organes de commande (39, 45, 50, 56) des moyens d'aiguillage sont marquées par les chiffres 0 et 1 disposés de sorte que les chiffres relatifs aux positions des organes de commande, lus de haut en bas, expriment en numération binaire le numéro d'ordre progressif de la case (27) rendue accessible à la bille (29), et en ce que lesdites cases (27) sont, à leur tour, marquées par un numéro d'ordre progressif exprimé en numération décimale.

12.- Jeu selon la revendication 8, caractérisé en ce que ledit plan transparent (24) superposé au plan de jeu (20) présente des moyens de référence de position (64), et il est prévu un organe de couverture (66) non transparent qui peut être appliqué auxdits moyens de référence de position pour cacher le canal de guidage du plan de jeu et ses ramifications.

13.- Jeu didactique selon la revendication 12, caractérisé en ce que le plan de jeu (20) présente, à sa surface inférieure, des moyens d'accrochage (67) pour supporter ledit organe de couverture (66) lors qu'il n'est pas utilisé.

## Patentansprüche

1.- Spiel, umfassend eine von Kugeln (29) infolge Schwerkraft befahrbare Spielplatte (20), einen Führungskanal (26), der aufeinanderfolgende Reihenfolgen von durch Weichenmitteln (37, 43, 48, 54) gesteuerte Gabelungen aufweist, wobei jedes Weichenmittel zwei Arbeitsstellungen besitzt, die der Zugänglichkeit an einen der beiden sich in Bezug auf jede Gabelung stromabwärts befindlichen Zweige entsprechen, und eine Mehrzahl von sich am Ende der letzten Gabelungen des Führungskanals (26) angeordneten, zur Aufnahme der Kugeln dienenden Aufnahmefächern (27), dadurch gekennzeichnet, dass das Spiel ein oberes Magazin (25) für die Kugeln und einen zur Auslassung der Kugeln nacheinander aus dem Magazine steuerbaren Verschluss (30-31) aufweist, dass der Führungskanal (26) in einer mit dem Verschluss zusammenfallenden Stellung beginnt, dass die zur Aufnahme der Kugeln dienenden Aufnahmefächer (27) in ihrem unteren Teil einen vielfachen Verschluss (59) aufweisen, der die Möglichkeit gibt, alle Kugeln in einen unteren Teil (28) der Spielplatte (20) auszuladen, dass die erste Gabelung des Führungskanals durch ein, mit einem ersten Steuerglied (39) separat verbundenes Weichenmittel (37) gesteuert wird, dass die Gabelungen jeder nachfolgenden Reihenfolge der verschiedenen Zweige des Führungskanals (26) an ein Steuerungsglied (45, 50, 56) derselben Reihenfolge angeschlossen sind, und dass die verschiedenen Steuerungsglieder (39, 45, 50, 56) der Ordnung nach angeordnet sind.

2.- Spiel nach Anspruch 1, dadurch gekennzeichnet, dass die Weichenmittel (37, 43, 48, 54) als Dreieckbasisprismen ausgebildet sind, die geeignet sind, jeweils einen Zweig einer Gabelung abzusperren, und zugleich als Einmündungsführung für der anderen Zweig zu dienen, wobei alle Weichenmittel (37, 43, 48, 54) der Gabelungen derselben Reihenfolge an einer gemeinsamen Leiste (38, 44, 49, 55) angebracht sind, die in eine in der Spielplatte (20) ausgehöhlte Führung (41, 47, 52, 58) eingeschoben und darin in Längsrichtung gleitend angeordnet ist, und an einem seiner Enden einen das Steuerungsglied bildenden Vorsprung (39, 45, 50, 56) aufweist.

3.- Spiel nach Anspruch 2, dadurch gekennzeichnet, dass jede Leiste (46, 44, 49, 55) zwei Ausnehmungen aufweist, die mit einem Federglied (42, 53) zusammenarbeiten, um die zwei Arbeitstellungen der durch die Leiste abgestützten Weichenmittel zu bestimmen.

4.- Spiel nach Anspruch 1, dadurch gekennzeichnet, dass die Verschlüsse (30-31, 59) aus Schaufeln bestehen, die normalerweise derart angeordnet sind, dass sie die Bahn der Kugeln (29) absperren und in eine neutralisierte Stellung verschoben werden können, wobei die Schaufeln (30-31, 59) eines jeden Verschlusses an einer gemeinsamen Leiste angebracht sind, die in eine in der Spielplatte (20) ausgehöhlte Führung (35, 62) eingeschoben und darin in Längsrichtung gleitend angeordnet ist und an einer ihrer Enden einen das Steuerungsglied bildenden Vorsprung (33, 61) aufweist und mit einem Federglied (36, 63) zusammenarbeitet, der ihn zur normalen Stellung der Absperrung der Schaufeln hin schiebt.

5.- Spiel nach Anspruch 4, dadurch gekennzeichnet, dass der am Ausgang aus dem Magazin (25) angeordnete Verschluss (30-31) zwei Zwecks Begrenzung des Durchganges an eine einzige Kugel (29) für jede Betätigung gegenseitig verschobene Schaufeln (30-31), und auch einen im Kugelmagazin (25) beweglichen Stift (34), trägt.

6.- Spiel nach Ansprüche 2 bis 5, dadurch gekennzeichnet, dass die Spielplatte (20) ein Blatt (68) umfasst, das oberhalb der die Weichenmittel (37, 43, 48, 54) und die Absperrschaufeln (30, 31, 59) tragenden Leisten (32, 38, 44, 49, 55, 60) angeordnet ist.

7.- Spiel nach Anspruch 1, dadurch gekennzeichnet, dass die Spielplatte (20) unterhalb des vielfachen Verschlusses (59) der Fächern (37) einen Rücklaufkanal (28) bildet, der sich peripherisch längs der Spielplatte (20) erstreckt und in das obere Magazin (25) einmündet.

8.- Spiel nach Anspruch 1, dadurch gekennzeichnet, dass die Spielplatte (20) durch eine durchsichtige Platte (24) abgedeckt ist, die geeignet ist die Kugeln (29) auf der Spielplatte festzuhalten und die zugleich doch die Beobachtung der Kugeln gestattet, und dass der Führungskanal (26) für die Spielplatte (20) strukturell durch die genannte durchsichtige Platte (24) dargestellt ist.

9.- Spiel nach Anspruch 1, dadurch gekennzeichnet, dass der Führungskanal (26), in der Nähe seiner Gabelungen, durch Bezeichnungen markiert ist, die ähnlichen, die Stellungen der Steuerungsglieder (39, 45, 50, 56) der entsprechenden Weichenmittel (37, 43, 48, 54) markierenden Bezeichnungen entsprechen.

10.- Spiel nach Anspruch 9, dadurch gekennzeichnet, dass die Bezeichnungen als verschiedene Färbungen der aus jeder Gabelung des Führungskanals (26) ausgehenden Zweige und als entsprechend gefärbte, durch die Steuerungsglieder (39, 45, 50, 56) abgedeckte Gebiete ausgebildet sind.

11.- Spiel nach Anspruch 1, dadurch gekennzeichnet, dass die zwei Stellungen der Steuerungsglieder (39, 45, 50, 56) der Weichenmittel mittels den Ziffern 0 und 1 bezeichnet sind, die derart angeordnet sind, dass die die Stellungen der Steuerungsglieder betreffenden Ziffern, von oben nach unten gelesen, in binärer Nummerung die progressive Ordnungszahl des zur Kugel (29) zugänglich gewordenen Faches (27) ausdrücken und dass die Fächer (27) ihrerseits durch eine in Dezimalnummerung ausgedrückte progressive Ordnungszahl markiert sind.

12.- Spiel nach Anspruch 8, dadurch gekennzeichnet, dass die oberhalb der Spielplatte (20) angeordnete durchsichtige Platte (24) Stellungsbezugmittel (64) aufweist, und dass ein undurchsichtiges Deckungsglied (66) vorgesehen ist, das auf diese Stellungsbezugsmittel aufgebracht werden kann, um den Führungskanal der Spielplatte und die Zweige derselben zu verdecken.

13.- Spiel nach Anspruch 12, dadurch gekennzeichnet, dass die Spielplatte (20) an ihrer Unterseite Anhakungsmittel (67) aufweist, um das Deckungsglied (66) dann abzustützen, wenn es nich benutzt wird.

**Claims**

1.- A game including an inclined play plate (20), on which little balls (29) may roll by gravity, a guide channel (26) having a number of successive bifurcations controlled by switch means (37, 43, 48, 54), each switch means having two operative positions corresponding to accessibility of either one of two branches disposed downstream each bifurcation, and a number of nests (27) for receiving the balls at the end of the last bifurcations of the guide channel (26), characterized in that the game is provided with a top magazine (25) for the balls and with a shutter (30-31) operable for delivering from the magazine the balls one after the other, that the guide channel (26) departs from said shutter (30-31), that said nests (27) for receiving the balls have a bottom multiple shutter (59) allowing discharging all balls into a bottom portion (28) of the play plate (20), that the first bifurcation of the guide channel is controlled by a switch means (37) singularly connected to a first control member (39), that the bifurcations of each successive order of the various branches of the guide channel (26) are connected to a control member (45, 50, 56) of the same order, and that the different control members (39, 45, 50, 56) are orderly disposed.

2.- A game as claimed in Claim 1, characterized in that said switch means (37, 43, 48, 54) are formed by triangular prisms arranged to occlude each time a branch of a bifurcation, at the same time acting as entrance guide for the other branch, all the switch means (37, 43, 48, 54) of the bifurcation of a same order being supported by a list member (38, 44, 49, 55) slidably housed in longitudinal direction within a guide cavity (41, 44, 49, 55) formed in the play plate (20), and having at one end a projection (39, 45, 50, 56) forming the control member.

3.- A game as claimed in Claim 2, characterized in that each said list member (36, 44, 49, 55) has two recesses cooperating with a springing member (42, 53) in order to define the two operative positions of the switch means supported by the list member.

4.- A game as claimed in Claim 1, characterized in that said shutters (30-31, 59) are formed by vanes normally arranged to intercept the trajectory of the balls (29) and movable to a neutralized position, the vanes (30-31, 59) of each shutter being supported by a common list member (32, 60) slidably housed into a guide cavity (35, 62) formed in the play plate (20), having at one end a projection (33, 61) forming a control member, and cooperating with a springing member (36, 63) which biases said list member towards the normal position of interception of the vanes.

5.- A game as claimed in Claim 4, characterized in that the delivery shutter (30-31) situated at the outlet of the ball magazine (25) has two mutually offset vanes (30, 31) for limiting the passage to a single ball (29) every actuation, and that it further supports a pin (34) movable within the magazine (25) for the balls.

6.- A game as claimed in Claims 2 to 5, characterized in that said play plate (20) comprises a sheet (68) disposed over said lists members (32, 38, 44, 49, 55, 60) supporting the switch means (37, 43, 48, 54) and the shutting vanes (30, 31, 59).

7.- A game as claimed in Claim 1, characterized in that said play plate (20) forms, under said multiple shutter (59) of the nests (37), a return

**0 101 624**

channel (28), extending peripherally to the play plate (20) and opening into the upper ball magazine (25).

8.- A game as claimed in Claim 1, characterized in that said play plate (20) is covered by a transparent cover (24) capable of retaining the balls (29) on the play plate yet allowing the vision thereof, and that said guide channel (26) for the play plate (20) is constructionally a part of said transparent cover (24).

9.- A game as claimed in Claim 1, characterized in that said guide channel (26) is marked at its bifurcations by means of marks corresponding to similar marks identifying the positions of the control members (39, 45, 50, 56) of the corresponding switch means (37, 43, 48, 54).

10.- A game as claimed in Claim 9, characterized in that said marks are formed by different colorations of the branches which depart from each bifurcation of said guide channel (26), and by correspondingly colored zones left uncovered by said control members (39, 45, 50, 56).

11.- A game as claimed in Claim 1, characterized in that the two positions of the control members (39, 45, 50, 56) of the switch means are marked by the digits 0 and 1 disposed in such a manner that the digits relating to the positions of the control members, read from the top towards the bottom, indicate in the form of a binary number the progressive number of the nest (27) rendered reachable by the ball (29), and in that said nests (27), on their turn, are marked by a progressive number expressed in the form of a decimal number.

12.- A game as claimed in Claim 8, characterized in that said transparent cover (24) superimposed to the play plate (20) has position reference means (64), and a non transparent covering member (66) is provided which may be applied onto said position reference means in order to conceal the guide channel of the play plate and its ramifications.

13.- A game as claimed in Claim 12, characterized in that said play plate (20) has, at its lower surface, hooking means (67) for supporting said covering member (66) when it is not in use.

FIG.1

FIG.2

FIG. 3

FIG. 4

3